# EUROPÄISCHE PATENTSCHRIFT

(11) **EP 0 362 472 B1**
(45) Veröffentlichungstag und Bekanntmachung des Hinweises auf die Patenterteilung: **01.09.1993**
(21) Anmeldenummer: 89110752.6
(22) Anmeldetag: 14.06.1989
(51) Int. Cl.: C08L 75/04, C08L 9/02

(54) **Polyblend aus thermoplastischem Polyurethan-Elastomer und Verfahren zu seiner Herstellung**
Polyblend of thermoplastic polyurethane elastomer and process for its preparation
Polyblend d'un elastomère thermoplastique de polyuréthane et son procédé de préparation

(30) Priorität: 07.10.1988 DE 3834103
(43) Veröffentlichungstag der Anmeldung: 11.04.1990
(73) Patentinhaber: Firma Carl Freudenberg, 69469 Weinheim (DE)
(72) Erfinder: Vogt, Ulrike, Dr., D-6103 Griesheim (DE); Wenneis, Wolffried, Dr., D-6800 Mannheim (DE); Schuhmacher, Günter, Dr., D-6940 Weinheim (DE)

(56) Entgegenhaltungen:
- EP-A- 0 192 230
- DE-A- 1 570 073
- GB-A- 897 705
- US-A- 4 051 095

## Beschreibung

Die Erfindung betrifft ein Polyblend aus thermoplastischem Polyurethan-Elastomer und Nitrilkautschuk sowie ein Verfahren zu dessen Herstellung. Das Polyblend besitzt eine Härte von 55 bis 70 Shore A.

Dieser Härtebereich entspricht vulkanisierten Elastomeren, welche jedoch die Nachteile aufweisen, daß bei der Herstellung ein spezielles Vulkanisierverfahren durchgeführt und entstehende Abfälle entsorgt werden müssen. Ferner sind bei vielen Anwendungsgebieten, z.B. Arbeitsstiefel, Verkleidungen oder Schläuche, ein gummiartiger Griff oder extreme Flexibilität gefragt; hier liegt insbesondere das Einsatzgebiet thermoplastisch verarbeitbarer Polyurethan-Elastomere.

Um bei diesen Härten kleiner als 70 Shore A einzustellen, werden häufig Weichmacher zugesetzt:
Eine kommerziell erhältliche 60 Shore A-Type enthält ca. 20 Gew.-% Dimethylglycolphthalat. Trotz guter Verarbeitbarkeit liegen gewichtige Nachteile darin, daß der Weichmacher extrahierbar ist, d.h. die Langzeitstabilität von z.B. mit Ölen in Verbindung stehenden Produkten ist sehr gering. Ferner verflüchtigt sich der Weichmacher insbesondere bei Beanspruchung über längere Zeit bei höheren Temperaturen. Ein dritter, technologischer Nachteil besteht darin, daß Mischungen von Polyurethan mit Weichmachern unverträgliche Systeme darstellen; dies führt zum Ausschwitzen des Weichmachers mit der Zeit und somit zu erheblichen Veränderungen der physikalischen Eigenschaften.

US-A-4051095 beschreibt ein Polyurethan-Hydrolyseproduct als Weichmacher für Acrylgummi. Er wird hergestellt durch Hydrolyse von Polyurethanabfällen unter Druck in einem Autoklaven bei erhöhter Temperatur. Es entsteht dabei eine viskose Flüssigkeit.

Dieser flüssige Weichmacher wird insbesondere in Acrylgummiwalzen für die Druckindustrie eingesetzt und verleiht dem Werkstoff eine Shore A-Härte von 20 bis 50. Nachteiligerweise ist dieser Polyurethanweichmacher an sich mit dem Acrylgummi unverträglich und arbeitet sich bei Betrieb der Walze aus dieser heraus. Jedoch bewirkt eine Kombination mit acrylnitrilverträglichen Weichmacher-Estern, daß der Polyurethan-Weichmacher sich dauerhaft in die Gummimatrix integrieren läßt, auch wenn im Laufe der Zeit das Walzenmaterial den Ester-Weichmacher wieder verliert.

Eine zweite Möglichkeit, weiches thermoplastisches Polyurethan herzustellen, besteht darin, das Verhältnis Polyisocyanat/Polyol erheblich zu erniedigen: So ist beispielsweise dieses Verhältnis auf 30/100 anzusetzen, wenn ein 60 Shore A-Produkt erhalten werden soll. Ein solchermaßen geringer Isocyanatanteil verringert jedoch die Zugfestigkeit des Materials erheblich. Desweiteren wird die Fließfähigkeit der Masse derart verringert, daß die Verarbeitbarkeit insbesondere im Spritzgußverfahren dahingehend beeinträchtigt wird, daß sehr lange Zykluszeiten und ein nachteiliges Verkleben der Masse in Kauf genommen werden müssen. Außerdem zeigen solche Produkte eine große Schwindung, was bei Herstellung und Auslegung der Werkzeuge naturgemäß Probleme bereitet.

Aus diesem Stand der Technik heraus ist es das Ziel der Erfindung, ein Polyblend aus thermoplastisch verarbeitbarem Polyurethanelastomer und Nitrilkautschuk anzugeben, welches eine Härte von 55 bis 70 Shore A aufweist, keinen Weichmacher benötigt, dessen Polyurethankomponente aus den eingangs genannten Gründen einen nicht zu geringen Polyisocyanat-Anteil enthält und das innerhalb kurzer Zykluszeiten, ohne anzukleben, spritzbar und gut, bei sofortiger Formbeständigkeit des Extrudats, extrudierbar ist.

Die Lösung der Aufgabe besteht in der Angabe eine Polyblends mit den Kennzeichen des Patentanspruchs 1. Das spezifische Herstellungsverfahren trägt, unter Anwendung der üblichen Verfahren des Vermischens und Knetens bei einer Temperatur von 180 bis 215°C und des anschließenden Pelletierens, die kennzeichnenden Merkmale des Anspruchs 2.

Das erfindungsgemäße Polyblend besitzt eine Härte von 55 bis 70 Shore A und besteht aus einer Mischung aus einem thermoplastischen Polyurethanelastomer der Härte 80 bis 90 Shore A und einem Nitrilkautschuk mit einem Acrylnitrilgehalt von 34 Mol-%. Das Polyurethanelastomer besitzt einen minimalen Anteil der Polyisocyanatkomponente von 50 Gew.-%. Der Nitrilkautschuk weist eine Viskosität von M_{L} 1+4, 100°C = 50 auf. Dem Polyblend sind gegebenenfalls geringe Anteile von Füllstoffen, Vernetzern und Alterungsschutzmitteln beigegeben, jedoch keinerlei Weichmacher-Zusätze. Das Verhältnis der Polyurethan-Anteile zu den Nitrilkautschuk-Anteilen beträgt 30:70 bis 40:60 Vol.-%.

Das Herstellungsverfahren erfolgt durch Vermischen und Kneten bei 180 bis 215°C sowie durch anschließendes Pelletieren.

Es ist neu und nicht vorhersehbar, daß sich ein weiches thermoplastisches Polyblend herstellen läßt, welches bei einem Unterschuß von nur noch 30 bis 40 Vol.-% Polyurethankomponente nicht nur die in der Aufgabenstellung geforderte Weichheit und gute Verarbeitbarkeit aufweist, sondern welches zudem die vorteilhaften charakteristischen Eigenschaften der Polyurethane beibehält:
Die Wärmeformbeständigkeit entspricht derjenigen von reinem Polyurethan, Produkte aus dem erfindungsgemäßen Material sind beständig gegen Öle und lassen sich unter Verwendung herkömmlicher Polyurethan-Haftvermittler aus Metall fixieren.

Diese Gesamtheit an vorteilhaften Eigenschaften wird nur erreicht, wenn erfindungsgemäß das Verhältnis der thermoplastischen Polyurethan-Elastomeren zu der Nitrilkautschuk-Komponente 30:70 bis 40:60 Vol.-% beträgt und ersteres Polyurethan-Elastomer mindestens 50 Gew.-% Polyisocyanat-Anteil und der Nitrilkautschuk 34 Mol-% Acrylnitril enthält. Das Blend ist absolut weichmacherfrei.

Die Herstellung dieser Masse ist zusätzlich dadurch gekennzeichnet, daß das eingesetzte Polyurethanelastomer eine Härte von 80 bis 90 Shore A und der eingesetzte Nitrilkautschuk eine Viskosität von M_{L} 1+4, 100°C = 50 aufweist.

Die Technologie der Herstellung des erfindinngsgemäßen Polyblends bewegt sich im konventionellen Rahmen und ist nicht Gegenstand der vorliegenden Erfindung. So können diese Blends entweder diskontinuierlich in einem Gummikneter oder kontinuierlich im Reaktionsextruder hergestellt werden.

Das kontinuierliche Verfahren beinhaltet das Vormischen der Mischungsbestandteile, wie Polyurethan, Kautschuk und evtl. Füllstoffe, Vernetzer und Alterungsschutzmittel. Anschließend wird das Gemisch im Extruder aufgeschmolzen, geknetet und über eine beheizte Förderschnecke zu einer Düse mit Granuliereinrichtung transportiert. Dieses Granulat kann sofort im Spritzguß- oder Extrusionsverfahren zum fertigen Produkt weiterverarbeitet werden.

Bei der diskontunierlichen Herstellung wird in einem beheizten Gummikneter der Nitrilkautschuk vorgegeben und nach dem Plastifizieren das Polyurethan zugeführt. Die Mischung wird nach dem Kneten gewalzt, zu einem Fell ausgezogen und in Streifen geschnitten, die in einer Granuliereinrichtungen zerkleinert werden. Das Granulat kann nun zu beliebiger Zeit zum fertigen Produkt weiterverarbeitet werden.

Die folgenden Beispiele sollen das Herstellungsverfahren und die Produkteigenschaften des erfindungsgemäßen Polyblends näher verdeutlichen:

### Beispiel 1

### Die Mischungsbestandteile

30 Vol.-% Polyurethan (80 Shore A, 50 Gew.-% Polyisocyanatkomponente)
67 Vol.-% Nitrilbutadienkautschuk (34 Mol% Acrylnitril-Gehalt; Viskosität M_{L} 1+4,100°C = 50)
3 Vol.-% Zusatzstoffe, bestehend aus Pentaerythritol-tetrakis-(3-(3′,5′-di-tert.butyl-4′-hydroxyphenyl)propionat), 0,2 Teile, und Dilaurylthiodipropionat, 0,6 Teile, jeweils als Alterungsschutzmittel; Triallylcyanurat, 2,0 Teile, als Beschleuniger; 1,3-bis-(tert.butyl-peroxy-isopropyl)benzol, 1,0 Teile, als Vernetzer,
werden in einem kontinuierlichen Verfahren zunächst im Taumelmischer vorgemischt und anschließend dosiert in einen Extruder geführt, wo die Masse innerhalb 5 Minuten beheizte Zonen von 180 bis 215 °C durchläuft und dabei aufgeschmolzen und geknetet wird. Danach wird das Gut über eine über 205 °C heiße Förderschnecke zu einer Düse mit Granuliereinrichtung transportiert.

Das Granulat wird mittels eines Spritzgußverfahrens zu Platten verarbeitet, aus denen für eine normgerechte Messung Prüfkörper ausgestanzt werden können, gemäß den Vorschriften aus DIN 53 505, DIN 53 504-A-S2 und DIN 53 517-A.

### Produkteigenschaften:

| | |
|---|---|
| Härte: | 60 Shore A (DIN 53 505) |
| Zugfestigkeit: | 10 MPa (DIN 53 504-A-S2) |
| Bruchdehnung: | 450 % (DIN 53 504-A-S2) |
| Druckverformungsrest, als Maß für das Rückstellvermögen (DIN 53 517-A): | 24 h/ 23 °C: 15 % |
| | 24 h/ 70 °C: 25 % |
| | 24 h/100 °C: 45 % |

Auch zeigten Torsionsschwingungsdiagramme gemäß DIN 53 455, daß die Wärmeformbeständigkeit des gemäß diesem Beispiel hergestellten Elastomers weitestgehend derjenigen des reinen Polyurethans entspricht.

### Beispiel 2

Bei ansonsten gleicher Rezeptur und gleichem Verfahren wird ein Verhältnis Polyurethan:Nitrilbutadienkautschuk von 35:62 Vol.-% gewählt.

### Mechanische Eigenschaften:

| | |
|---|---|
| Härte: | 65 Shore A (DIN 53 505) |
| Zugfestigkeit: | 12 MPa (DIN 53 504-A-S2) |
| Bruchdehnung: | 450 % (DIN 53 504-A-S2) |
| Druckverformungsrest (DIN 53 517-A): | 24 h/ 23 °C: 15 % |
| | 24 h/ 70 °C: 35 % |
| | 24 h/100 °C: 55 % |

Die Härte des erfindungsgemäßen Elastomers kann also durch Änderung des Mischungsverhältnisses Polyurethan/Kautschuk gezielt eingestellt werden. Ein Granulat gemäß Beispiel 1 kann z.B. in einer Spritzgußmaschine zu Saugkappen für Flaschengreifer verarbeitet werden. Die Wandstärke dieser ca. 5 cm hohen Kappen beträgt gewöhnlich 1 bis 2 mm. Man erreicht mit dem erfindungsgemäßen Polyblend Zykluszeiten um 30 Sekunden, was einen sehr niedrigen Wert darstellt.

Die Herstellung schlauchförmiger Körper mit Innendurchmessern um 30 mm ist ohne Vakuum-Kalibrierung möglich; das Extrudat ist sofort nach dem Verlassen der Düse eigenstabil.

Erfindungsgemäß aufgebaute bzw. hergestellte, thermoplastische Polyurethan-Elastomere zeigen eine hohe Ölbeständigkeit; auch nach mehrtägiger Lagerung tritt kein bedeutendes Quellen auf. Da Weichmacher völlig fehlt, kommt es zu keiner Ölverschmutzung durch austretende Wirkstoffe. Ferner läßt sich der Werkstoff durch konventionelle Haftvermittler für Polyurethane mit Metallen dauerhaft verbinden, was die gute Eignung für Gummi-/Metall-Elemente, wie Schwingungsdämpfer und elastische Dichtungen, begründet.

## Patentansprüche

1. Polyblend mit einer Härte von 55 bis 70 Shore A, bestehend aus einer Mischung aus einem thermoplastischen Polyurethanelastomer der Härte 80 bis 90 Shore A mit
a) einem minimalen Anteil der Polyisocyanatkomponente im Polyurethan von 50 Gew.-%
und aus einem Nitrilkautschuk mit
b) einem Acrylnitrilgehalt von 34 Mol-% sowie einer Viskosität von M_{L} 1+4, 100°C = 50
und gegebenenfalls mit geringen Anteilen von Füllstoffen, Vernetzern und Alterungsschutzmitteln, wobei
c) das Verhältnis der Polyurethan-Anteile zu den Nitrilkautschuk-Anteilen von 30:70 bis 40:60 Vol.-% beträgt
und wobei
d) jegliche Weichmacher-Zusätze fehlen.

2. Verfahren zur Herstellung eines Polyblends mit einer Härte von 55 bis 70 Shore A aus einem thermoplastischen Polyurethanelastomer und Nitrilkautschuk, gegebenenfalls unter Zusatz geringer Anteile an Füllstoffen, Vernetzern und Alterungsschutzmitteln, durch Vermischen und Kneten bei 180 bis 215°C sowie anschließendes Pelletieren,
dadurch gekennzeichnet, daß man
ein Polyurethanelastomer (a) der Härte 80 bis 90 Shore A und mit einem Mindestgehalt an Polyisocyanat von 50 Gew.-% und
einen Nitrilkautschuk (b) mit einer Viskosität von M_{L} 1+4,100°C = 50, enthaltend einen Acrylnitrilanteil von 34 Mol-%,
im prozentualen Volumenverhältnis a:b von 30:70 bis 40:60 miteinander verarbeitet und daß man keinerlei Weichmacher zusetzt.

## Claims

1. A polyblend having a Shore A hardness of from 55 to 70, composed of a mixture of a thermoplastic polyurethane elastomer having a Shore A hardness of from 80 to 90 and
a) a minimum content of the polyisocyanate component in the polyurethane of 50% by weight
and of a nitrile rubber having
b) an acrylonitrile content of 34 mol% and a viscosity of M_{L} 1+4, 100°C = 50
and, if desired, small contents of fillers, crosslinking agents and anti-ageing agents, wherein
c) the ratio of the polyurethane contents to the nitrile rubber contents is from 30:70 to 40:60% by volume
and wherein
d) any plasticiser additives are absent.

2. A process for the preparation of a polyblend having a Shore A hardness of from 55 to 70 from a thermoplastic polyurethane elastomer and nitrile rubber, if desired with addition of small contents of fillers, crosslinking agents and anti-ageing agents, by mixing and kneading at from 180 to 215°C and subsequent pelleting, characterised in that
a polyurethane elastomer (a) having a Shore A hardness of from 80 to 90 and a minimum content of polyisocyante of 50% by weight and
a nitrile rubber (b) having a viscosity of M_{L} 1+4, 100°C = 50, comprising an acrylonitrile content of 34 mol%,
are processed with one another in a percentage volume ratio a:b of from 30:70 to 40:60, and in that no plasticiser at all is added.

## Revendications

1. Polyblend ayant une dureté de 55 à 70 Shore A, constitué d'un mélange d'un élastomère de polyuréthane thermoplastique d'une dureté de 80 à 90 Shore A avec
a) une teneur minimale du constituant polyisocyanate dans le polyuréthane de 50% en poids,
et d'un caoutchouc nitrile avec
b) une teneur en acrylonitrile de 34 moles-% ainsi qu'une viscosité de M_{L} 1+4, 100°C = 50
et, éventuellement, avec une faible teneur en matières de charge, en agents de réticulation et en agents de protection contre le vieillissement, tandis que
c) le rapport de la teneur en polyuréthane à la teneur en caoutchouc nitrile est compris entre 30:70 et 40:60% en volume
alors que
d) des additions de plastifiant quelconque manquent totalement.

2. Procédé de production d'un polyblend ayant une dureté de 55 à 70 Shore A, en utilisant un élastomère de polyuréthane thermoplastique et un caoutchouc nitrile, éventuellement avec addition de faibles teneurs en matières de charge, en agents de réticulation et en agents de protection contre le vieillissement, par mélange et malaxage entre 180 et 215°C avec transformation ultérieure en boulettes, caractérisé en ce que l'on traite ensemble
un élastomère de polyuréthane (a) de dureté de 80 à 90 Shore A et ayant une teneur minimale en polyisocyanate de 50% en poids,
et
un caoutchouc nitrile (b) ayant une viscosité de M_{L} 1+4, 100°C = 50 contenant une teneur en acrylonitrile de 34 moles-%,
avec un rapport volumique en pour-cent a:b compris entre 30:70 et 40:60 et que l'on n'ajoute aucun plastifiant.
